**Europäisches Patentamt**

**European Patent Office**

**Office européen des brevets**

(19)

(11) Numéro de publication: **0 041 876**
**B1**

# (12) FASCICULE DE BREVET EUROPEEN

(45) Date de publication du fascicule du brevet:
06.06.84

(51) Int. Cl.³: **B 60 K 15/00**

(21) Numéro de dépôt: 81400662.3

(22) Date de dépôt: 28.04.81

(54) Fixation d'un réservoir à carburant en matière synthétique.

(30) Priorité: 06.06.80  FR 8012623

(43) Date de publication de la demande:
16.12.81 Bulletin 81/50

(45) Mention de la délivrance du brevet:
06.06.84 Bulletin 84/23

(84) Etats contractants désignés:
BE DE GB IT NL SE

(56) Documents cités:
FR - A - 488 886
FR - A - 1 510 002
GB - A - 1 227 897
US - A - 1 500 646

(73) Titulaire: **REGIE NATIONALE DES USINES RENAULT,
Boîte postale 103 8-10 avenue Emile Zola,
F-92109 Boulogne-Billancourt (FR)**

(72) Inventeur: **Marcheix, Raymond, 7, rue Cavalotti,
F-75018 Paris (FR)**
Inventeur: **Desiage, Christian, 6 bis, rue des Houtraits,
F-92500 Rueil Malmaison (FR)**

(74) Mandataire: **Réal, Jacques et al, 8 & 10, avenue Emile
Zola, F-92109 Boulogne-Billancourt (FR)**

## Description

La présente invention se rapporte à un dispositif de fixation d'un réservoir à carburant en matière synthétique, notamment pour véhicules automobiles.

Les réservoirs à carburant en matière synthétique sont fixés le plus souvent sur la structure d'un véhicule à l'aide de deux sangles métalliques gainées de caoutchouc afin d'éviter l'agressivité du métal sur le réservoir.

De plus la fixation de ces sangles sur la structure du véhicule nécessite la mise en place de renforts supplémentaires. Souvent on observe un phénomène de fluage de la matière synthétique accentué par les élévations de la température d'utilisation; ceci engendre une diminution de l'efficacité du maintien du réservoir.

La fixation ci-dessus est peu économique et pénalise la fonction fixation d'un tel réservoir par rapport à un réservoir en tôle, qui s'effectue plus simplement par des vis, des rondelles et des écrous.

De plus, lors de l'utilisation d'un véhicule, le réservoir est soumis à des accélérations verticales, transversales et longitudinales dues au freinage; il doit donc être maintenu positivement sur le chassis, ce qui n'est pas suffisamment le cas selon le dispositif ci-dessus.

On connait également les dispositifs de fixation d'un réservoir à carburant métallique, disposé à l'avant du véhicule et introduit par la partie supérieure du compartiment moteur. Ceci est illustré par le brevet américain US-A-1 500 646, qui décrit un réservoir métallique comportant, sur sa face dirigée vers l'avant un orifice coopérant avec une protubérance ménagée sur une traverse de la partie avant du véhicule contre laquelle il prend appui, ainsi que des bras de fixation latérale reposant sur des supports solidarisés aux faces latérales du compartiment moteur.

Pour des raisons de sécurité, la disposition du réservoir a été déplacée hors du compartiment moteur, et plus particulièrement à l'arrière du véhicule.

D'autre part, on s'oriente motamment pour des questions de gain de poids, vers la réalisation de réservoir en matière synthétique, qui impliquent des moyens de fixation spécifique à leur nature et à l'emplacement de leur montage essentiellement par le dessous du véhicule.

L'objet de la présente invention réside dans une solution sûre et économique de fixation d'un réservoir à carburant en matière synthétique mis en place par la zone inférieure et arrière du véhicule.

Selon l'invention, la face antérieure dudit réservoir en matière synthétique comporte des protubérances qui coopèrent, à la suite du déplacement vers l'avant du réservoir, avec les orifices correspondants situés dans une traverse du chassis qui lui fait face, tandis qu'au moins l'une des oreilles de fixation disposées latéralement sur le réservoir prend appui sur la face supérieure de l'aile horizontale d'un longeron du véhicule constitué par un profilé en L. De plus, les ailes horizontales desdits longerons sont découpées de façon à permettre le passage desdites oreilles de fixation du réservoir lors de sa présentation. Puis, celui-ci étant poussé vers l'avant, contre la traverse, lesdites oreilles reposent alors sur la face supérieure des parties pleines des ailes horizontales des longerons.

Selon une variante de l'invention, seule l'une des oreilles du réservoir repose sur la face supérieure de l'aile horizontale du longeron correspondant, tandis que l'oreille de fixation disposée du côté opposé est pressée contre la face inférieure de l'aile horizontale de l'autre longeron.

Dans tous les cas, en position fixée, le réservoir est pressé contre la traverse de façon à créer une légère contrainte entre les protubérances et les orifices récepteur correspondants de la traverse.

L'invention sera maintenant décrite au regard des fig. 1 à 5 ci-jointes, données à titre d'exemples non limitatifs, qui représentent respectivement:

— la fig. 1: une vue au plan du réservoir utilisé selon l'invention;
— la fig. 2: une vue, selon l'arrière du véhicule, du réservoir en cours de montage;
— la fig. 3: une vue en plan du réservoir; le montage terminé;
— la fig. 4: une vue en plan d'une variante du montage précédent;
— la fig. 5: une vue arrière de la variante ci-dessus.

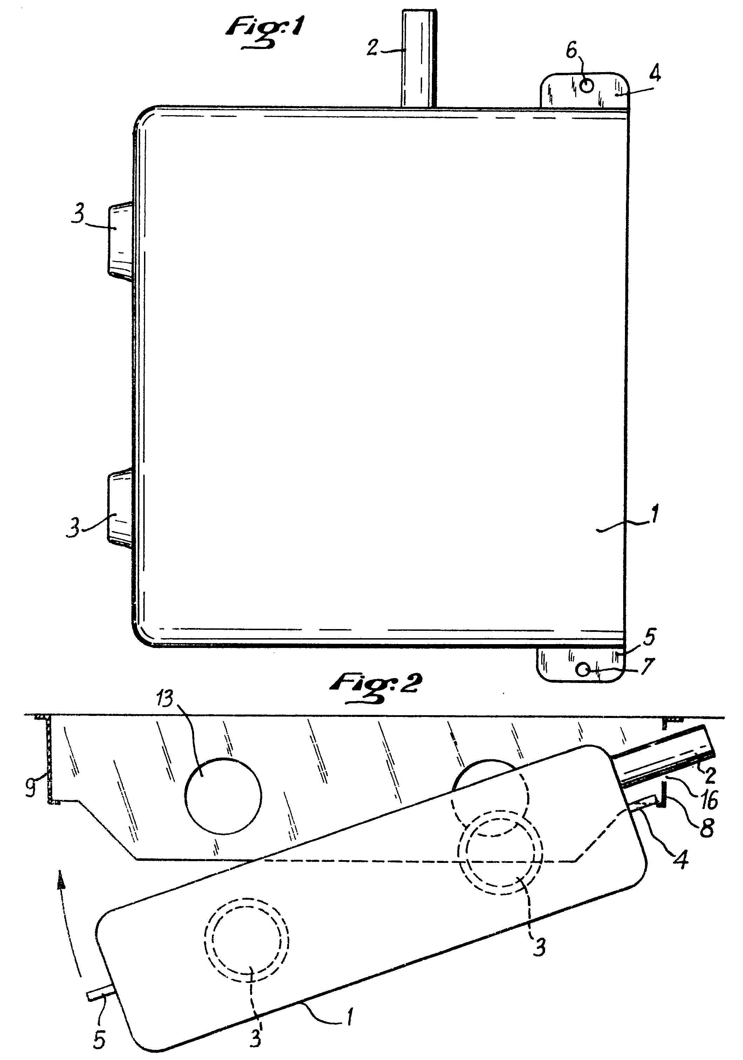

Le réservoir 1 de la fig. 1 présente un embout de remplissage 2, au moins une protubérance antérieure telles que 3 et des oreilles de fixation latérales 4 et 5, percées de trous 6 et 7 pour le passage de moyens de fixation.

On voit à la fig. 3 que la partie arrière du châssis du véhicule supportant le réservoir 1 présente deux longerons 8—9 en L dont les extrémités horizontales inférieures 10—11 sont dirigées face à face, et réunies transversalement, vers l'avant du véhicule, par une traverse 12, présentant au droit des protubérances 3 du réservoir, des orifices recepteurs 13.

Les extrémités horizontales inférieures 10—11 des longerons sont découpées en 14—15, de façon à permettre le passage des oreilles 4—5 du réservoir; il en est de même en 16 de la paroi verticale du longeron de droite pour l'introduction de l'embout de remplissage 2.

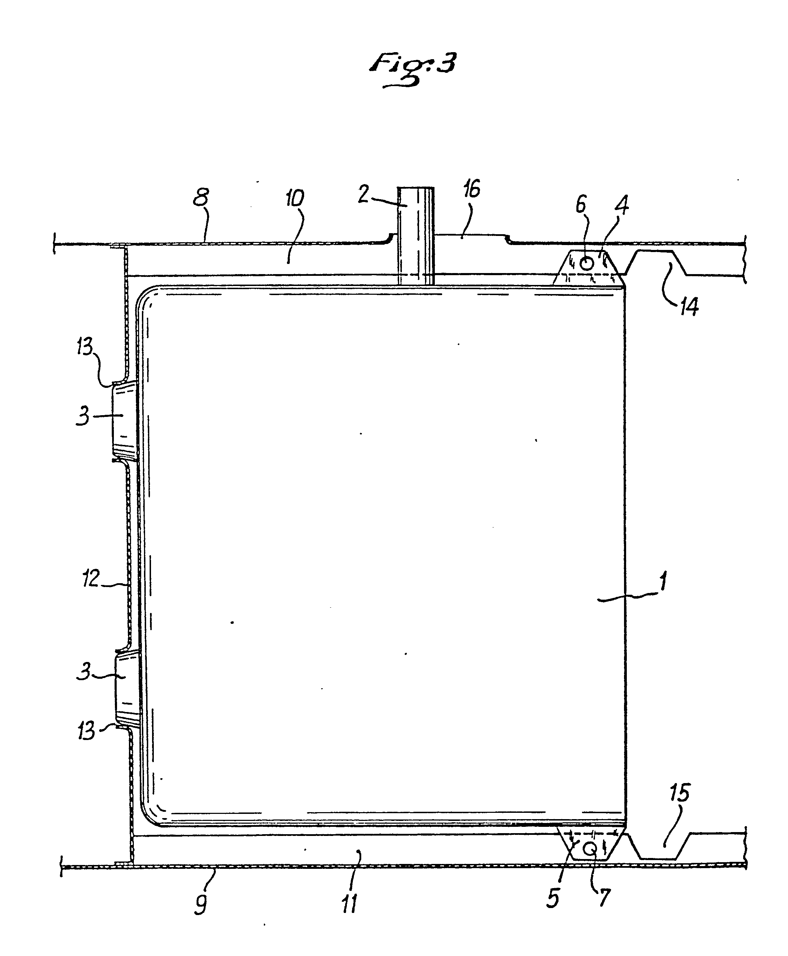

Le montage du réservoir 1 s'effectue comme représenté à la fig. 2.

On dispose tout d'abord l'embout de remplissage 2 dans l'orifice surdimensionné 16 du longeron, en présentant le réservoir 1 en oblique; puis on l'amène progressivement en position horizontale, les oreilles de fixation 4—5 passant au travers des découpes 14—15 prévues à cet effet dans les longerons 8—9.

Le réservoir 1 est alors poussé vers l'avant du véhicule (côté gauche de la fig. 3), de telle façon que les protubérances 3 s'encastrent dans les orifices 13 de la traverse qui lui font face.

Dans cette position, on remarque que les oreilles 4—5 reposent bien sur une partie pleine des zones horizontales inférieures 10—11 des longerons 8—9.

On exerce alors une poussée complémentaire du réservoir vers l'avant, pour créer une légère contrainte des protubérances 3 dans les orifices 13, assurant ainsi un bon maintien de l'ensemble.

Dans cette position, les trous 6 et 7 des oreilles de fixation 4—5 font face à deux trous percés dans les extrémités inférieures 10—11 des longerons, ce qui permet ainsi le passage de moyens de maintien en position du réservoir, par exemple représentés par des boulons 17 (fig. 5).

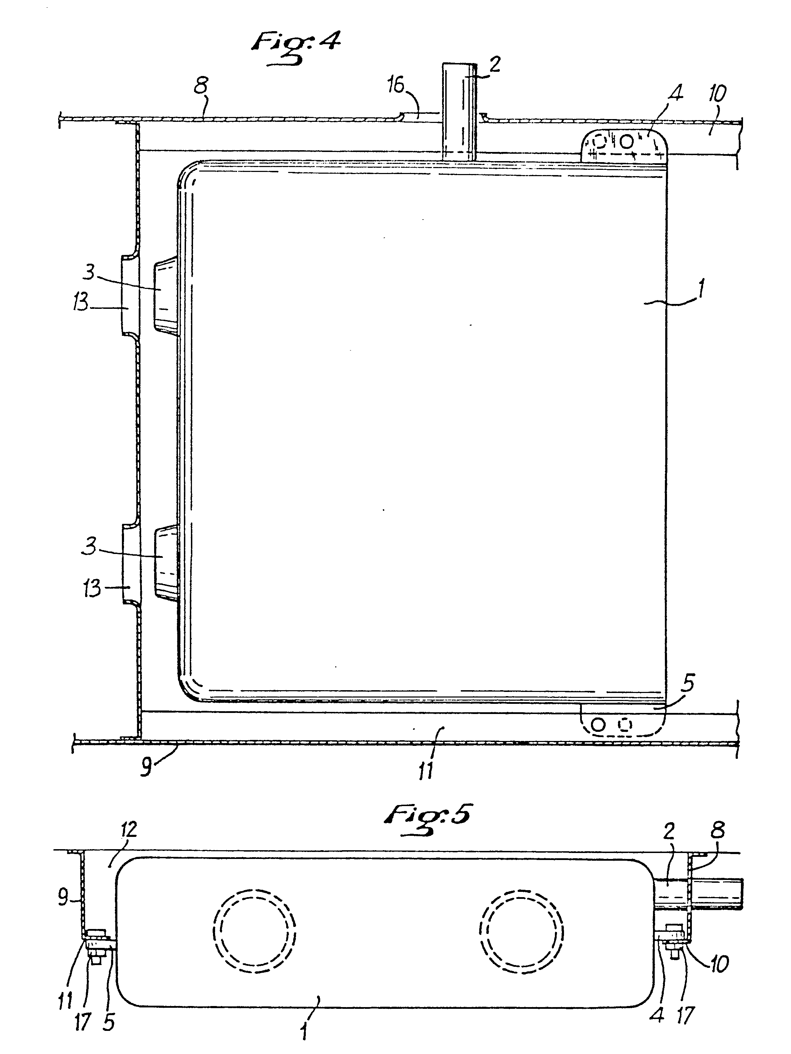

La variante de l'invention représentée à la fig. 4 découle sensiblement de la disposition précédente.

On y retrouve en effet le réservoir 1, ses protubérances 3 encastrables dans des orifices complémentaires 13 ménagés dans la traverse 12, ses oreilles de fixation 4—5 coopérant avec les extrémités horizontales inférieures 10—11 des longerons 8—9 en L, on embout de remplissage 2 introduit dans le passage 16 de la face verticule du longeron de droite.

Cependant, la différence entre les montages du réservoir selon les fig. 3 et 4 se situe au niveau de la disposition relative des oreilles de fixation 4—5 et des extrémités inférieures 10—11 des longerons.

En effet, dans le dernier cas, aucun passage tel que 14—15 n'est prévu dans ces derniers; le montage du réservoir 1 s'effectue, comme précédemment, par présentation oblique et introduction de l'embout 2 dans l'orifice 16 du longeron 8, puis amenée à l'horizontale, l'oreille 4 reposant à la surface de l'extrémité 10 du longeron 8.

Cependant, et contrairement à la première représentation, la seconde oreille de fixation 5 entre en contact avec l'extrémité 11 du longeron 9 par sa partie inférieure à laquelle elle est fixée.

Dans ce cas également, cette opération survient après création d'une certaine contrainte d'encastrement entre les protubérances 3 et les orifices 13 de la traverse 12. Cet assemblage final est visible à la fig. 5.

On ne sortira naturellement pas de l'invention en y apportant des variantes mineures, par exemple en changeant l'emplacement des ouvertures dans les longerons ou le nombre des oreilles de fixation, ou encore celui des protubérances, etc.

## Revendications

1. Fixation d'un réservoir à carburant notamment pour véhicule automobile, du type comportant sur sa face antérieure des moyens coopérants avec une traverse (12) du véhicule, celle-ci possédant des moyens d'ancrage complémentaires contre lesquels dedit réservoir prend appui, ce dernier présentant par ailleurs des fixations latérales (4, 5) utilisées conjointement avec des longerons (8, 9) constitutifs de la structure du véhicule, caractérisée par le fait que les moyens disposés à la face antérieure du réservoir, qui est en matière synthétique, ont la forme de protubérances (3) coopérant, à la suite du déplacement dudit réservoir vers l'avant, avec des orifices (13) correspondants situés dans ladite traverse (12), et que l'une au moins des fixations latérales constituées par des oreilles (4—5) est en appui sur la face supérieure de l'aile horizontale (10—11) du longeron (8—9) correspondant, constitué par un profilé en L.

2. Fixation d'un réservoir selon la revendication 1, caractérisée en ce que les ailes (10—11) horizontales des longerons (8—9) sont découpées de façon à permettre le passage des oreilles (4—5) de fixation, puis le réservoir (1) étant poussé vers l'avant contre la traverse (12), lesdites oreilles (4—5) de fixation reposent alors sur la face supérieure des parties pleines des ailes (10—11) horizontales des longerons (8—9).

3. Fixation d'un réservoir selon la revendication 1, caractérisée en ce que l'oreille (4) de fixation disposée d'un côté du réservoir (1) repose sur la face supérieure de l'aile (10) horizontale du longeron (8) correspondant, tandis que l'oreille (5) de fixation disposée du côté opposé est pressée contre la face inférieure de l'aile (11) horizontale de l'autre longeron (9).

4. Fixation d'un réservoir selon l'une quelconque des revendications précédentes, caractérisée en ce que le réservoir (1) est fixé sur les longerons (8—9) après qu'il ait été pressé contre la traverse (12) de façon à créer une légère contrainte entre ses protubérances et les orifices récepteurs correspondants.

## Patentansprüche

1. Befestigung eines Kraftstofftanks insbesondere für ein Kraftfahrzeug mit auf der Vorderseite angeordneten, mit einem Querträger (12) des Fahrzeugs zusammenwirkenden Mitteln, wobei dieser Querträger zusätzliche Verankerungsmittel besitzt, an denen der Tank sich abstützt und letzterer ferner seitliche Befestigungen (4, 5) aufweist, die zusammen mit zur Fahrzeugstruktur gehörenden Längsträgern (8, 9) verwendet werden, dadurch gekennzeichnet, daß die an der Vorderseite des aus Kunststoff bestehenden Tanks angebrachten Mittel die Form von Vorsprüngen (3) haben, die bei einer Vorwärtsbewegung des Tanks mit entsprechenden, in dem Querträger (12) befindlichen Öffnungen (13) zusammenwirken, und daß zumindest eine der seitlichen, durch Ösen (4—5) gebildeten Befestigungen auf der oberen Seite des waagrechten Flansches (10—11) des entsprechenden, als L-Profil ausgebildeten Längsträger (8—9) aufliegt.

2. Befestigung eines Tanks nach Anspruch 1, dadurch gekennzeichnet, daß die waagrechten Flansche (10—11) der Längsträger (8—9) derart ausgeschnitten sind, daß sie den Durchgang der Befestigungsösen (4—5) gestatten und alsdann, wenn der Tank (1) nach vorne gegen den Querträger (12) geschoben wird, die Befestigungsösen (4—5) auf der oberen Seite der vollen Teile der waagrechten Flansche (10—11) der Längsträger (8—9) aufliegen.

3. Befestigung eines Tanks nach Anspruch 1, dadurch gekennzeichnet, daß die an einer Seite des Tanks (1) angebrachte Befestigungsöse (4) auf der oberen Seite des waagrechten Flansches (10) des entsprechenden Längsträgers (8) aufliegt, während die auf der gegenüberliegenden Seite angebrachte Befestigungsöse (5) an die Innenseite des waagrechten Flansches (11) des anderen Längsträgers (9) gedrückt wird.

4. Befestigung eines Tanks nach einem der vorangehenden Ansprüche, dadurch gekennzeichnet, daß der Tank (1) an den Längsträgern (8—9) befestigt ist, nachdem er an den Querträger (12) gedrückt wurde, derart, daß eine leichte Spannung zwischen seinen Vorsprüngen und den entsprechenden aufnehmenden Ösen entsteht.

**Claims**

1. Fuel tank fixing means particularly for a motor-vehicle, of the type comprising on its front face means cooperating with a cross-member (12) of the vehicle, said cross-member being fitted with complementary anchoring means against which said tank rests, the latter furthermore being provided with lateral fixing means (4, 5) used in combination with beams (8, 9) integral with the structure of the vehicle, characterized in that the means placed on the front face of the tank, which is made of a synthetic material, have the shape of protuberances (3) which, when the tank moves forwardly cooperate with corresponding openings (13) provided in said cross-member (12), and in that at least one of the lateral fixing means consisting of ears (4, 5) rests on the top face of the horizontal flange (10, 11) of the corresponding beam (8, 9) which consists of an L section.

2. Tank fixing means according to claim 1, characterized in that the horizontal flanges (10, 11) of the beams (8, 9) are cut so as to allow the passing of the fixing ears (4, 5), whereupon, the tank (1) being pushed forwardly against the cross-member (12), said fixing ears (4, 5) rest on the top face of the full portions of the horizontal flanges (10, 11) of the beams (8, 9).

3. Tank fixing means according to claim 1, characterized in that the fixing ear (4) placed on one side of the tank (1) rests on the top face of the horizontal flange (10) of the corresponding beam (8), whereas the fixing ear (5) placed on the opposite side is pressed against the bottom face of the horizontal flange (11) of the other beam (9).

4. Tank fixing means according to any one of preceding claims, characterized in that the tank (1) is fixed on the beams (8—9) after having been pressed against the cross-member (12) so as to generate a slight stress between its protuberances and the corresponding receiving openings.

0 041 876

Fig:1

Fig:2

## Fig. 3

Fig. 4

Fig. 5